# DEMANDE DE BREVET EUROPEEN

(11) **EP 0 807 516 A1**
(43) Date de publication de la demande: **19.11.1997**
(21) Numéro de dépôt: 97401089.4
(22) Date de dépôt: 15.05.1997
(51) Int. Cl.: B32B 7/12, B32B 27/18

(54) **Matériau comprenant un film recouvert d'une couche d'oxyde de silicium et un film de polyoléfine**

(30) Priorité: 17.05.1996 FR 9606166
(71) Demandeur: ELF ATOCHEM S.A., 92800 Puteaux (FR)
(72) Inventeur: Breant, Patrice, 27470 Serquigny (FR); Tordjeman, Philippe, 64140 Billere (FR)
(74) Mandataire: Pochart, François

(57) **Abrégé**

L'invention a pour objet un matériau comprenant un film recouvert d'une couche d'oxyde de silicium, un film de liant et un film de polyoléfine, dans lequel le film de liant contient un catalyseur. L'invention concerne aussi un emballage comprenant un matériau selon l'invention, ainsi que l'utilisation d'un catalyseur dans un film de liant disposé entre un film recouvert d'une couche d'oxyde de silicium et un film de polyoléfine, pour améliorer l'adhérence.

## Description

La présente invention concerne un matériau, notamment d'emballage, comprenant un film recouvert d'une couche d'oxyde de silicium et un film de polyoléfine.

Elle concerne plus particulièrement un matériau comprenant un film recouvert d'une couche d'oxyde de silicium et un film de polyoléfine, un liant d'adhésion étant disposé entre la couche d'oxyde de silicium et le film de polyoléfine. On peut, par exemple, du côté du film de polyoléfine coller à chaud ce matériau sur du carton, puis éventuellement recouvrir chaque face de l'ensemble obtenu avec une feuille de polyéthylène.

Ces matériaux sont utiles pour fabriquer des emballages en forme de briques pour liquides alimentaires.

JP05330568 (Kokai) publié le 14 décembre 1993 décrit des films de polyester recouverts de silice sur lesquels on colle une feuille de résine éthylénique à base d'un adhésif qui est un copolymère éthylène/anhydride maléique/acrylate d'éthyle.

JP07125150 (Kokai) publié le 16 mai 1995 décrit des films multicouches comprenant une couche intermédiaire en EVA et une couche adjacente en un adhésif contenant un composé boré.

La demanderesse a maintenant trouvé qu'il est possible d'obtenir des matériaux indélaminables, ou à tout le moins présentant une adhérence renforcée, qui peuvent être préparés à basse température, en utilisant des liants comprenant un catalyseur de réaction.

Ainsi, la présente invention fournit un matériau comprenant un film recouvert d'une couche d'oxyde de silicium, un film de liant et un film de polyoléfine, dans lequel le film de liant contient un catalyseur. Le liant est disposé entre le film de polyoléfine et la couche d'oxyde de silicium.

Selon une première variante, dans le matériau selon l'invention, le liant est un polymère éthylène/ (méth)acrylate d'alkyle/termonomère, le termonomère pouvant être greffé ou terpolymérisé. Ce termonomère est de préférence du méthacrylate de glycidyle. De préférence, ce liant est un terpolymère éthylène/(méth)acrylate d'alkyle/ méthacrylate de glycidyle, ce dernier étant greffé ou terpolymérisé.

Selon une seconde variante, dans le matériau selon l'invention, le liant est un copolymère éthylène/comonomère à insaturation. Ce comonomère est de préférence du méthacrylate de glycidyle.

Selon un mode de réalisation, le catalyseur est choisi parmi : H3BO3, 1,4-diazabicyclo[2,2,2]octane (DABCO), méthyl-2-imidazole (M2ID), acide stéarique, stéarate de calcium, Na2B407 (Borax), NaH2PO4, tris-nonylphénylphosphite (TNPP), tris-(2,4-méthylphényl)phosphite (Irgafos), dilaurate de dibutylétain (DLDBE). De préférence le catalyseur est H3BO3.

Selon une variante, dans le matériau selon l'invention, le catalyseur est présent à une concentration de 500 ppm à 0,5% en poids (5000 ppm), par rapport au poids de liant.

Selon une autre variante, dans le matériau selon l'invention, le catalyseur est présent à une concentration de 10 ppm à 500 ppm en poids, par rapport au poids de liant.

Selon un premier mode de réalisation, le film recouvert d'une couche d'oxyde de silicium est fourni disposé sur un primaire.

Selon un autre mode de réalisation, le film recouvert d'une couche d'oxyde de silicium est fourni exempt de primaire.

Selon un mode de réalisation, dans le matériau selon l'invention, le matériau du film recouvert d'une couche d'oxyde de silicium est du polyéthylène téréphtalate ou du polyéthylène.

Selon encore un mode de réalisation, dans le matériau selon l'invention, le film de polyoléfine est en polyéthylène ou en copolymère d'éthylène.

L'invention a encore pour objet un emballage comprenant un matériau selon l'invention.

L'invention a encore pour objet l'utilisation d'un catalyseur dans un film de liant disposé entre un film recouvert d'une couche d'oxyde de silicium et un film de polyoléfine, pour améliorer l'adhérence à même température de fabrication ou pour diminuer la température de fabrication pour une adhérence équivalente.

L'invention est maintenant décrite plus en détail dans la description qui suit.

L'invention offre plusieurs avantages par rapport à l'art antérieur. D'une part, à température de mise en oeuvre égale, l'ajout d'un catalyseur permet d'augmenter sensiblement l'adhérence, et dans la plupart des cas d'obtenir des structures indélaminables. D'autre part, l'ajout d'un catalyseur permet de diminuer le température de mise en oeuvre tout en obtenant une adhérence élevée.

Le film recouvert d'une couche d'oxyde de silicium est connu dans l'art antérieur. C'est par exemple un film de polyester tel que polyéthylène téréphtalate (PET) ou polybutylène téréphtalate (PBT), ou de polyamide (PA), ou de polyéthylène (PE) ou de polypropylène (PP). L'épaisseur du film peut être comprise entre 5 et 200 µm. De préférence le film est un film de PET ou de PE. La couche d'oxyde de silicium, qui est aussi dénommé SiOx, est par exemple une couche monomoléculaire ou une couche présentant jusqu'à 5000 angströms d'épaisseur. Cette couche peut être déposée par plasma, évaporation ou tout autre procédé approprié.

Ce film recouvert d'une couche d'oxyde de silicium peut être disposé classiquement sur un primaire d'adhésion, et enroulé en des bobines de film. Ce film est alors fourni disposé sur un primaire.

Lorsqu'un tel primaire est utilisé, il est disposé côté film, i.e. côté PET par exemple. Ce primaire peut être un primaire polyuréthanne.

Le film de polyoléfine est à base de polyéthylène, polypropylène ou de copolymères de l'éthylène tel que par exemple les copolymères éthylène/propylène, éthylène/ butylène, éthylène/hexène, les copolymères de l'éthylène avec au moins un monomère choisi parmi (i) les esters vinyliques d'acides carboxyliques saturés tels que acétate de vinyle, ou (ii) les esters ou sels d'acides carboxyliques insaturés tels que (méth)acrylate d'alkyle. Des mélanges de polyoléfines sont aussi possibles.

L'épaisseur du film de polyoléfine est classique, par exemple comprise entre 10 et 500 µm.

Le liant selon l'invention correspond au terme classiquement admis dans l'art, à savoir désigne tout liant de co-extrusion, liant thermoplastique, agent de collage thermofusible, etc..

A titre d'exemple de liant, on peut citer les (co)polyoléfines modifiées (par copolymérisation, terpolymérisation ou greffage) avec un dérivé d'acide carboxylique insaturé. On peut aussi utiliser à titre de liant certaines polyoléfines fonctionnalisées, pour autant que la teneur en groupes fonctionnels soit suffisante pour assurer l'adhésion des couches entre elles. Des exemples de tels liants sont donnés dans les brevets suivants: EP-A-210307, EP-A-33220, EP-266994, FR-A-2132780, EP-A-171777, US-P-4758477, US-P-4762890, US-P-4966810, US-P-4452942 et US-P-3658948.

Des exemples de ces liants sont :
- les copolymères de l'éthylène copolymérisé avec butène, hexène, octène, mélangés éventuellement avec des copolymères éthylène-propylène, greffés avec de l'anhydride maléique, lesdits copolymères éthylène/alpha-oléfine contenant par exemple de 35 à 80% en poids d'éthylène, le taux de greffage en anhydride étant compris entre 0,01 et 1% en poids, par exemple entre 0,05 et 0,5%, par rapport au poids total du copolymère greffé;
- les copolymères éthylène et acétate de vinyle (EVA), maléisés ou non (l'anhydride maléique pouvant être greffé ou terpolymérisé), contenant plus particulièrement jusqu'à 40% en poids d'acétate de vinyle, de 0,01 à 1% en poids d'anhydride maléique greffé ou de 0,1 à 10% en poids d'anhydride maléique terpolymérisé, par rapport au poids total de copolymère;
- les copolymères éthylène et monomère à insaturation éthylènique tel que méthacrylate de glycidyle, contenant plus particulièrement jusqu'à 40% en poids de monomère à insaturation, par rapport au poids total de copolymère;
- les polyoléfines, telles que polyéthylène (LLDPE, LDPE, VLDPE, etc) ou polypropylène, greffées avec un dérivé d'acide carboxylique, tel que l'anhydride maléique, le taux de greffage étant compris entre 0,01 et 10% en poids;
- les terpolymères éthylène et (méth)acrylate d'alkyle (tel que acrylate de méthyle, d'éthyle ou de t-butyle) et anhydride maléique, contenant jusqu'à 40% en poids de (méth)acrylate d'alkyle et de 0,01 à 10% en poids d'anhydride maléique, par rapport au poids total de terpolymère;
- les terpolymères éthylène et (méth)acrylate d'alkyle (tel que acrylate de méthyle, d'éthyle ou de t-butyle) et méthacrylate de glycidyle, contenant jusqu'à 40% en poids de (méth)acrylate d'alkyle et de 0,01 à 10% en poids de méthacrylate de glycidyle, par rapport au poids total de terpolymère;
le termonomère pouvant être greffé ou terpolymérisé.

Les terpolymères éthylène/(méth)acrylate d'alkyle/ termonomère, en particulier éthylène/(méth)acrylate d'alkyle/méthacrylate de glycidyle (greffé ou terpolymérisé), sont les liants préférés dans la présente invention.

Des mélanges de liants sont aussi appropriés.

L'épaisseur des films de liant est classique, par exemple comprise entre 5 et 500 µm, par exemple 300 µm.

Le terme de catalyseur, tel qu'il est employé dans la présente invention, désigne tout composé susceptible d'accélérer la réaction à l'interface SiOx/liant au niveau des groupes fonctionnels présents sur le liant, conduisant ainsi à une adhérence améliorée à même température de fabrication ou une adhérence équivalente à température de fabrication plus faible.

A titre d'exemple de catalyseur, on peut citer : H3BO3, DABCO, M2ID, acide stéarique, stéarate de calcium, Na2B4O7, NaH2PO4, TNPP, Irgafos, DLDBE.

Le catalyseur est ajouté en une quantité qui est suffisante pour catalyser la réaction à l'interface. En général, le catalyseur est efficace à des concentrations très faibles, par exemple de 10 ppm en poids, par rapport au poids de liant.

La concentration que l'on peut utiliser dans la présente invention peut varier dans de larges mesures, par exemple de 10 ppm à 500 ppm, ou de 500 ppm à 0,5 % en poids (5000 ppm), par rapport au poids de liant.

Le catalyseur est ajouté au liant par tout moyen connu dans l'art, tel que par exemple le compoundage, mis en oeuvre à une température appropriée en fonction des composants.

Les films peuvent comprendre tout additif classiquement utilisé dans l'art, tels que des agents anti-UV, des anti-oxydants, des charges, des adjuvants de traitement, etc.

Les matériaux selon l'invention sont préparés selon les techniques connues de l'homme de l'art. Par exemple, ils peuvent être obtenus par laminage du film recouvert d'une couche d'oxyde de silicium avec un film bi-couche liant/polyoléfine. Alternativement, chaque film peut être laminé ou (co)extrudé séquentiellement.

Les matériaux selon l'invention peuvent être utilisés tels quels ou bien associés à d'autres matériaux tels que des films ou des feuilles de polymères ou de carton, par scellage à chaud, collage ou coextrusion pour fabriquer des emballages, notamment alimentaires.

Les exemples suivants illustrent l'invention sans la limiter.

### Exemples.

Dans ces exemples, on utilise des films de polyester PET de 12µm d'épaisseur recouvert d'une couche de SiOx de 150 Angströms d'épaisseur, ladite couche ayant été déposée par plasma. Ce film de PET recouvert d'une couche de SiOx est désigné ci-après par PET-SiOx. Il est disponible soit avec un primaire d'adhésion côté PET, soit sans primaire. Le primaire, lorsqu'il est présent, est un primaire polyuréthanne.

Le liant des exemples 1 à 4 est un liant qui est un polymère éthylène/méthacrylate de glycidyle, dont la composition en poids est 92/8 et présentant un MFI de 6 (à 190°C).

Le liant de l'exemple 5 est un liant qui est un polymère éthylène/acrylate de butyle/méthacrylate de glycidyle, dont la composition en poids est 62/30/8 et présentant un MFI de 6 (à 190°C).

Le film de liant a une épaisseur de 300 µm.

Les différents catalyseurs sont des catalyseurs du commerce. Les catalyseurs sont mélangés au liant par la technique du compoundage, sur une extrudeuse bi-vis, dont la température est réglée entre 130 et 140°C en fonction des constituants. Dans un premier temps on prépare un mélange-maître, que l'on incorpore ensuite au liant restant pour obtenir la formulation finale.

Lorsque le liant est disponible sous forme de granulés, on prépare une structure PET-SiOx/liant directement à partir des granulés.

Lorsque le liant est disponible sous forme de film (sous presse), on prépare la structure par thermoscellage des deux films PET-SiOx et liant.

L'adhésion est mesurée par pelage à 180° à température ambiante et à 100 mm/mn pour des éprouvettes de 25 mm de large. On effectue 5 essais, et on prend la valeur moyenne.

On étudie l'influence de divers catalyseurs sur l'adhésion liant/PET-SiOx, en mesurant l'adhésion, pour divers catalyseurs, à diverses concentrations, et à diverses températures.

La température To est la température minimale de mise en oeuvre au delà de laquelle le liant développe une adhésion (On recherche des températures To faibles).

Dans les tableaux qui suivent, "sans" indique qu'il n'y a pas de catalyseur, "ac. stéa." indique l'acide stéarique et "IND" indique que la structure est indélaminable. Les valeurs d'adhésion données dans les tableaux sont exprimées en N/25 mm.

### Exemple 1.

Le liant est disponible sous forme de film, le PET-SiOx est disponible sans primaire, et les différents catalyseurs sont présents en une quantité de 1000 ppm. Les résultats sont consignés dans le tableau 1 qui suit.

Ces résultats montrent que la température à partir de laquelle une adhésion se produit est plus faible lorsqu'on utilise un catalyseur. Ainsi, avec H3BO3, la température To diminue d'au moins 10°C. Par ailleurs, pour une même To, les forces de rupture sont plus importantes en présence de catalyseur.

**Tableau 1.**

| T°C | sans | borax | NaH2PO4 | ac stéa. | DLDBE | H3BO3 |
|---|---|---|---|---|---|---|
| 110 | 0 | 0 | 0 | 0 | 0 | 0,09 |
| 120 | 0,025 | 0,09 | 0,09 | 0,08 | 0,15 | 0,5 IND |
| 130 | 1 IND | 2,4 IND | 1,5 | 1,6 | 1,1 IND | IND |
| 140 | IND | IND | 2,5 IND | 2,1 IND | IND | IND |
| 150 | IND | IND | IND | IND | IND | IND |
| 160 | IND | IND | IND | IND | IND | IND |

### Exemple 2.

Le liant est disponible sous forme de film, le PET-SiOx est disponible avec primaire d'adhésion, et les différents catalyseurs sont présents en une quantité de 1000 ppm. Les résultats sont consignés dans le tableau 2 qui suit.

Ces résultats montrent que la température à partir de laquelle une adhésion se produit est plus faible lorsqu'on utilise un catalyseur. Ainsi, avec H3BO3, la température To diminue d'au moins 20°C. Par ailleurs, pour une même To, les forces de rupture sont plus importantes en présence de catalyseur.

**Tableau 2.**

| T°C | sans | borax | NaH2PO4 | ac stéa. | DLDBE | H3BO3 |
|---|---|---|---|---|---|---|
| 105 | 0 | 0 | 0 | 0 | 0 | 1,5 IND |
| 110 | 0 | 0 | 0 | 0 | 0 | 2 IND |
| 120 | 0,025 | 0,1 | 0,5 | 0,5 | 0,15 | 0,5 IND |
| 130 | 0,7 IND | 1,1 IND | 2 IND | 1,6 IND | 1,1 IND | IND |
| 140 | IND | IND | 2,5 IND | 2,1 IND | IND | IND |
| 150 | IND | IND | IND | IND | IND | IND |
| 160 | IND | IND | IND | IND | IND | IND |

### Exemple 3.

Le liant est disponible sous forme de granulés, le PET-SiOx est disponible sans primaire d'adhésion, et on étudie l'influence de la concentration en H3BO3. Les résultats sont consignés dans le tableau 3 qui suit.

Ces résultats indiquent qu'à partir d'une concentration de 500 ppm, l'adhésion est très nettement améliorée par le catalyseur.

**Tableau 3.**

| T°C | sans | 25 ppm | 50 ppm | 100 ppm | 500 ppm | 1000 ppm |
|---|---|---|---|---|---|---|
| 100 | 0 | 0 | 0 | 0 | 0 | 0 |
| 110 | 0 | 0 | 0 | 0 | 0,04 | 0,09 |
| 120 | 0,025 | 0,06 | 0,15 | 0,5 | 1,13 | 0,5 IND |
| 130 | 1 IND | 2,6 | 1,67 | 1,5 | IND | IND |
| 140 | IND | 3 IND | 2,6 IND | 2,7 IND | IND | IND |

### Exemple 4.

Le liant est disponible sous forme de granulés, le PET-SiOx est disponible avec primaire d'adhésion, et on étudie l'influence de la concentration en H3BO3.

Les résultats sont consignés dans le tableau 4 qui suit, et indiquent qu'à partir d'une concentration de 25 ppm, l'adhésion est très nettement améliorée par le catalyseur.

**Tableau 4.**

| T°C | sans | 25 ppm | 50 ppm | 100 ppm | 500 ppm | 1000 ppm |
|---|---|---|---|---|---|---|
| 100 | 0 | 0 | 0 | 0 | 0 | 0 |
| 110 | 0 | 0 | 0 | 0 | 1 IND | 2 IND |
| 120 | 0,025 | 0,05 | 0,025 | 0,04 | IND | IND |
| 130 | 0,7 IND | 1 IND | 1 IND | 0,9 | IND | IND |
| 140 | IND | IND | IND | 1,5 IND | IND | IND |

### Exemple 5.

Dans cet exemple, le liant des exemples précédants est remplacé par un autre liant, dont les caratéristiques ont été données ci-avant, les autres conditions restant identiques. On ajoute à ce liant H3BO3, à une concentration de 1000 ppm en poids. Les structures PET-SiOx et liant sont disponibles avec et sans primaire d'adhésion. Les résultats sont consignés dans le tableau 5 qui suit. Par ailleurs, on a comparé les résultats obtenus avec le liant des exemples précédents, où la concentration en catalyseur est de 1000 ppm (exemples 1 et 2, respectivement). Dans le tableau, "liant 1" indique le liant des exemples 1 à 4, tandis que "liant 2" indique le liant du présent exemple.

Ces résultats montrent clairement que l'adhésion est excellente, pour une température de mise en oeuvre très faible. Les résultats montrent aussi que d'excellents résultats sont obtenus avec le liant de l'exemple 5, par comparaison avec celui des exemples précédents.

**tableau 5.**

| | sans primaire | | avec primaire | |
|---|---|---|---|---|
| T°C | liant 1 | liant 2 | liant 1 | liant 2 |
| 90 | nd | IND | nd | IND |
| 105 | nd | nd | 1,5 IND | nd |
| 110 | 0,09 | IND | 2 IND | IND |
| 120 | 0,5 IND | nd | 0,5 IND | nd |
| 130 | IND | IND | IND | IND |
| 140 | IND | nd | IND | nd |
| 150 | IND | IND | IND | IND |
| nd : non déterminé | | | | |

### Exemple 6.

Les structures ci-dessus sont utilisées dans la préparation de matériaux multi-couches. A cette fin, on peut co-extruder un film polyéthylène/liant, que l'on couche sur un film PET/SiOx, pour former un film tri-couche qui est ensuite couché sur du carton. Avec ce matériau on forme une brique pour liquides, notamment liquides alimentaires tels que jus de fruit.

La présente invention fournit donc des matériaux aptes à être utilisés avantageusement pour la fabrication d'emballages alimentaires avec une couche de carton.

Bien entendu, la présente invention n'est pas limitée aux modes de réalisation indiqués, mais est susceptible de nombreuses variantes aisément accessibles à l'homme de l'art.

## Revendications

1. Matériau comprenant un film recouvert d'une couche d'oxyde de silicium, un film de liant et un film de polyoléfine, dans lequel le film de liant contient un catalyseur.

2. Matériau selon la revendication 1, dans lequel le liant est un polymère éthylène/(méth)acrylate d'alkyle/ termonomère, le termonomère pouvant être greffé ou terpolymérisé.

3. Matériau selon la revendication 2, dans lequel le liant est un polymère éthylène/(méth)acrylate d'alkyle/ méthacrylate de glycidyle, ce dernier étant greffé ou terpolymérisé.

4. Matériau selon la revendication 1, dans lequel le liant est un polymère éthylène/méthacrylate de glycidyle.

5. Matériau selon l'une quelconque des revendications 1 à 4, dans lequel le catalyseur est choisi parmi: H3BO3, 1,4-diaza-bicyclo[2,2,2]octane, méthyl-2-imidazole, acide stéarique, stéarate de calcium, Na2B4O7, NaH2PO4, tris-nonylphénylphosphite, tris- (2,4- méthylphényl)phosphite et dilaurate de dibutylétain.

6. Matériau selon la revendication 5, dans lequel le catalyseur est H3BO3.

7. Matériau selon l'une quelconque des revendications 1 à 6, dans lequel le catalyseur est présent à une concentration de 500 ppm à 0,5% en poids, par rapport au poids de liant.

8. Matériau selon l'une quelconque des revendications 1 à 6, dans lequel le catalyseur est présent à une concentration de 10 ppm à 500 ppm en poids, par rapport au poids de liant.

9. Matériau selon l'une des revendications 1 à 8, dans lequel le film recouvert d'une couche d'oxyde de silicium est fourni disposé sur un primaire.

10. Matériau selon l'une des revendications 1 à 8, dans lequel le film recouvert d'une couche d'oxyde de silicium est fourni exempt de primaire.

11. Matériau selon l'une des revendications 1 à 10, dans lequel le matériau du film recouvert d'une couche d'oxyde de silicium est du polyéthylène téréphtalate ou du polyéthylène.

12. Matériau selon l'une des revendications 1 à 11, dans lequel le film de polyoléfine est en polyéthylène ou en copolymère d'éthylène.

13. Utilisation d'un catalyseur dans un film de liant disposé entre un film recouvert d'une couche d'oxyde de silicium et un film de polyoléfine, pour améliorer l'adhérence à même température de fabrication ou pour diminuer la température de fabrication pour une adhérence équivalente.

14. Emballage comprenant un matériau selon l'une quelconque des revendications 1 à 12.
